# EUROPEAN PATENT APPLICATION

(11) **EP 4 096 278 A1**
(43) Date of publication of application: **30.11.2022**
(21) Application number: 20920445.2
(22) Date of filing: 23.09.2020
(51) Int. Cl.: H04W 24/04

(54) **METHOD AND APPARATUS FOR REPORTING IN-SITU FLOW INFORMATION TELEMETRY (IFIT) DETECTION INFORMATION**

(30) Priority: 17.02.2020 CN 202010097235
(71) Applicant: Huawei Technologies Co., Ltd., Shenzhen, Guangdong 518129, (CN)
(72) Inventor: HUANG, Jinming, Shenzhen, Guangdong 518129 (CN); HU, Yongjian, Shenzhen, Guangdong 518129 (CN)
(74) Representative: Gill Jennings & Every LLP
(86) International application number: PCT/CN2020/116960
(87) International publication number: WO 2021/164248

(57) **Abstract**

Embodiments of this application disclose a data reporting method. In the method, both a first device and a second device may periodically report iFIT measurement information to a network management device. Specifically, the first device sends iFIT measurement information of the first device to a control and management device at a first moment in a first reporting cycle, and the second device sends iFIT measurement information of the second device to the control and management device at a second moment in the first reporting cycle. The first moment is different from the second moment. Because the first moment is different from the second moment, the control and management device does not receive a large amount of iFIT measurement information in a short time. Correspondingly, this avoids a network congestion problem caused when a data receiving capability of the control and management device is inadequate to receive complete to-be-received iFIT measurement information, and avoids a packet loss of iFIT measurement information caused by the network congestion, so that iFIT measurement information received by the control and management device is more complete. Therefore, a measurement result of an iFIT technology is more accurate.

## Description

This application claims priority to Chinese Patent Application No. 202010097235.2, filed with the China National Intellectual Property Administration on February 17, 2020 and entitled "METHOD FOR REPORTING IN-SITU FLOW INFORMATION TELEMETRY iFIT MEASUREMENT INFORMATION AND APPARATUS", which is incorporated herein by reference in its entirety.

### TECHNICAL FIELD

This application relates to the data communication field, and in particular, to a method for reporting in-situ flow information telemetry iFIT measurement information and an apparatus.

### BACKGROUND

In a data communication network, a performance parameter of the data communication network may be measured by using a performance measurement technology, to determine service quality of the network. An in-situ flow information telemetry (in-situ flow information telemetry, iFIT) technology is a performance measurement technology for measuring a performance index of a data communication network.

A principle of the iFIT technology is as follows: A network device in a data communication network measures iFIT measurement information of the network device, and sends the iFIT measurement information obtained through measurement to a control and management device. The control and management device analyzes the received iFIT measurement information, and performs a corresponding operation based on an analysis result, for example, provides a network operation and maintenance suggestion.

Currently, network congestion may occur when a plurality of different network devices in a network report iFIT measurement information to a control and management device together at a same moment, and the network congestion may cause a packet loss of the iFIT measurement information reported by the network device. This affects integrity of iFIT measurement information received by the control and management device, and further affects accuracy of a measurement result.

### SUMMARY

Embodiments of this application provide a data reporting method, to resolve a network congestion problem caused when network devices report iFIT measurement information to a control and management device together, so that a measurement result of an iFIT technology is more accurate.

According to a first aspect, an embodiment of this application provides a data reporting method. In the method, both a first device and a second device may periodically report iFIT measurement information to a network management device. In a first reporting cycle, when reporting iFIT measurement information to the network management device, the first device and the second device do not report the iFIT measurement information to the control and management device together at a same moment. Specifically, the first device sends iFIT measurement information of the first device to the control and management device at a moment t1 in the first reporting cycle, and the second device sends iFIT measurement information of the second device to the control and management device at a moment t2 in the first reporting cycle. The moment t1 is different from the moment t2. It can be learned that because the first device and the second device report the iFIT measurement information to the control and management device at different moments, the control and management device does not receive a large amount of iFIT measurement information in a short time. Correspondingly, this avoids a network congestion problem caused when a data receiving capability of the control and management device is inadequate to receive complete to-be-received iFIT measurement information, and avoids a packet loss of iFIT measurement information caused by the network congestion, so that iFIT measurement information received by the control and management device is more complete. Therefore, a measurement result of an iFIT technology is more accurate.

In an implementation, for the purpose of enabling the first device and the second device to report the iFIT measurement information to the control and management device at different moments in the first reporting cycle, the first device may determine a first moment based on a first reporting condition. For example, the first device may determine the first moment based on a unique identifier of the first device. Specifically, a remainder obtained by dividing a value corresponding to a first time unit at the first moment by a first value is equal to a remainder obtained by dividing the unique identifier of the first device by the first value, the first value is less than or equal to a cycle for the first device to report iFIT measurement information to the control and management device, and a unit of the cycle is the first time unit. For another example, the first moment is a moment randomly selected by the first device.

In an implementation, for the purpose of enabling the first device and the second device to report the iFIT measurement information to the control and management device at different moments in the first reporting cycle, the second device may determine a second moment based on a second reporting condition. For example, the second device may determine the second moment based on a unique identifier of the second device. Specifically, a remainder obtained by dividing a value corresponding to the first time unit at the second moment by the first value is equal to a remainder obtained by dividing the unique identifier of the second device by the first value, the first value is less than or equal to a cycle for the first device to report iFIT measurement information to the control and management device, and a unit of the cycle is the first time unit. For another example, the second moment is a moment randomly selected by the second device.

In an implementation, a unique identifier of a device may be used to identify the device. For a device, a loopback address of the device, a media access control (media access control, MAC) address of the device, and a router identifier (router ID) of the device all may be used to identify the device. Therefore, the unique identifier of the device may be a loopback address of the device, a MAC address of the device, or a router ID of the device 102. In addition, in some embodiments, last N digits of a local nanosecond moment of a device, especially the last one digit of the local nanosecond moment, may also be used to identify the device. Therefore, the unique identifier of the device may alternatively be last N digits of a local nanosecond moment of the device, where a value of N may be, for example, 1.

According to a second aspect, an embodiment of this application provides a data reporting method. Specifically, a first device may separately report, to a control and management device, iFIT measurement information that needs to be reported in a first reporting cycle, to avoid that the control and management device receives a large amount of iFIT measurement information in a short time. Correspondingly, this avoids a network congestion problem caused when a data receiving capability of the control and management device is inadequate to receive complete to-be-received iFIT measurement information, and avoids a packet loss of iFIT measurement information caused by the network congestion, so that iFIT measurement information received by the control and management device is more complete. Therefore, a measurement result of an iFIT technology is more accurate. Specifically, the first device obtains in-situ flow information telemetry iFIT measurement information, where the iFIT measurement information includes a plurality of pieces of sub-iFIT measurement information. The first device separately reports the plurality of pieces of sub-iFTT measurement information to the control and management device at a plurality of different moments in the first reporting cycle, where the first reporting cycle is a cycle for the first device to report iFIT measurement information to the control and management device.

In an implementation, the plurality of pieces of sub-iFIT measurement information include first iFIT measurement information and second iFIT measurement information, and that the first device separately reports the plurality of pieces of sub-iFTT measurement information to the control and management device at a plurality of different moments in the first reporting cycle includes: The first device reports the first iFIT measurement information to the control and management device at a first moment in the first reporting cycle, and reports the second iFIT measurement information to the control and management device at a second moment in the first reporting cycle, where the first moment is different from the second moment.

In an implementation, the first moment is a moment randomly selected by the first device in the first reporting cycle.

In an implementation, the second moment is a moment randomly selected by the first device in the first reporting cycle.

According to a third aspect, an embodiment of this application provides a data reporting method. Specifically, after obtaining first iFIT measurement information, a first device may randomly select a moment from a first reporting cycle, and report the obtained first iFIT measurement information to a control and management device at the randomly selected moment. It may be understood that when each device that reports iFIT measurement information to the control and management device reports the iFIT measurement information to the control and management device by randomly selecting a reporting moment, because there is a low probability that all devices randomly select a same moment, the control and management device does not receive a large amount of iFIT measurement information in a short time. Correspondingly, a problem caused when the control and management device receives a large amount of iFIT measurement information in a short time can be avoided.

In an implementation, the first device may report iFIT measurement information to the control and management device in each reporting cycle by randomly selecting a reporting moment. To be specific, the first device may further obtain second iFIT measurement information, and report the second iFIT measurement information to the control and management device at a second moment randomly selected in a second reporting cycle. The first reporting cycle and the second reporting cycle are different reporting cycles. Therefore, the control and management device avoids network congestion in each reporting cycle.

In an implementation, the first iFIT measurement information may be a part of complete iFIT measurement information that the first device needs to report to the control and management device in the first reporting cycle. In this case, during specific implementation of obtaining the first iFIT measurement information by the first device, the complete iFIT measurement information may be first obtained, and the first iFIT measurement information is obtained according to the complete iFIT measurement information.

In an implementation, when the first iFIT measurement information is a part of complete iFIT measurement information that the first device needs to report to the control and management device in the first reporting cycle, the first device may further report another part to the control and management device. Specifically, if the complete iFIT measurement information further includes third iFIT measurement information in addition to the first iFIT measurement information, the first device may further obtain the third iFIT measurement information according to the complete iFIT measurement information, and report the third iFIT measurement information to the control and management device at a third moment in the first reporting cycle.

In an implementation, the third moment is a moment randomly selected by the first device in the first reporting cycle.

According to a fourth aspect, an embodiment of this application further provides a data obtaining method. The method includes: A control and management device receives first in-situ flow information telemetry iFIT measurement information sent by a first device at a first moment in a first reporting cycle; and the control and management device receives second iFIT measurement information sent by a second device at a second moment in the first reporting cycle, where the first moment is different from the second moment, and the first reporting cycle is a cycle for the first device and the second device to report iFIT measurement information to the control and management device. Because the first device and the second device report iFIT measurement information to the control and management device at different moments, the control and management device does not receive a large amount of iFIT measurement information in a short time. Correspondingly, this avoids a network congestion problem caused when a data receiving capability of the control and management device is inadequate to receive complete to-be-received iFIT measurement information, and avoids a packet loss of iFIT measurement information caused by the network congestion, so that iFIT measurement information received by the control and management device is more complete. Therefore, a measurement result of an iFIT technology is more accurate.

In an implementation, the first moment is a moment randomly selected by the first device in the first reporting cycle.

In an implementation, a remainder obtained by dividing a value corresponding to a first time unit at the first moment by a first value is equal to a remainder obtained by dividing a unique identifier of the first device by the first value, the first value is an integer less than or equal to a cycle for the first device to report iFIT measurement information to the control and management device, and a unit of the cycle is the first time unit.

In an implementation, the second moment is a moment randomly selected by the second device in the first reporting cycle.

In an implementation, a remainder obtained by dividing a value corresponding to the first time unit at the second moment by the first value is equal to a remainder obtained by dividing a unique identifier of the second device by the first value, the first value is an integer less than or equal to a cycle for the second device to report iFIT measurement information to the control and management device, and a unit of the cycle is the first time unit.

In an implementation, the first iFIT measurement information is a part of complete iFIT measurement information that the first device needs to report to the control and management device in the first reporting cycle. In this case, the method further includes: The control and management device receives, at a third moment in the first reporting cycle, third iFIT measurement information sent by the first device, where both the first iFIT measurement information and the third iFIT measurement information are sub-iFIT measurement information included in the iFIT measurement information that the first device reports to the control and management device in the first reporting cycle.

In an implementation, the third moment is a moment randomly selected by the second device in the first reporting cycle.

In an implementation, a remainder obtained by dividing a value corresponding to the first time unit at the third moment by a second value is equal to a remainder obtained by dividing the unique identifier of the first device by the second value, the second value is an integer less than or equal to the cycle for the first device to report iFIT measurement information to the control and management device, and the unit of the cycle is the first time unit.

In an implementation, the second iFIT measurement information is a part of complete iFIT measurement information that the second device needs to report to the control and management device in the first reporting cycle. In this case, the method further includes: The control and management device receives, at a fourth moment in the first reporting cycle, fourth iFIT measurement information sent by the second device, where both the second iFIT measurement information and the fourth iFIT measurement information are sub-iFIT measurement information included in the iFIT measurement information that the second device reports to the control and management device in the first reporting cycle.

In an implementation, the fourth moment is a moment randomly selected by the second device in the first reporting cycle.

In an implementation, a remainder obtained by dividing a value corresponding to the first time unit at the fourth moment by the second value is equal to a remainder obtained by dividing the unique identifier of the second device by the second value, the second value is an integer less than or equal to the cycle for the second device to report iFIT measurement information to the control and management device, and the unit of the cycle is the first time unit.

According to a fifth aspect, an embodiment of this application further provides a data reporting system. The system includes a first device, a second device, and a control and management device. The first device is configured to send first in-situ flow information telemetry iFIT measurement information to the control and management device at a first moment in a first reporting cycle. The second device is configured to send second iFIT measurement information to the control and management device at a second moment in the first reporting cycle. The first moment is different from the second moment, and the first reporting cycle is a cycle for the first device and the second device to report iFIT measurement information to the control and management device. In the system, because the first device and the second device report iFIT measurement information to the control and management device at different moments, the control and management device does not receive a large amount of iFIT measurement information in a short time. Correspondingly, this avoids a network congestion problem caused when a data receiving capability of the control and management device is inadequate to receive complete to-be-received iFIT measurement information, and avoids a packet loss of iFIT measurement information caused by the network congestion, so that iFIT measurement information received by the control and management device is more complete. Therefore, a measurement result of an iFIT technology is more accurate.

According to a sixth aspect, this application further provides a first device, including a transceiver unit and a processing unit. The transceiver unit is configured to perform a sending/receiving operation in the method provided in the second aspect. The processing unit is configured to perform an operation other than the sending/receiving operation in the second aspect. For example, when the first device is configured to perform the method in the second aspect, the transceiver unit is configured to send first iFIT measurement information to a control and management device, and the processing unit is configured to obtain iFIT measurement information that includes a plurality of pieces of sub-iFIT measurement information. Alternatively, the transceiver unit is configured to perform a sending/receiving operation in the method provided in the third aspect. The processing unit is configured to perform an operation other than the sending/receiving operation in the third aspect. For example, when the first device is configured to perform the method in the third aspect, the transceiver unit is configured to send first iFIT measurement information to a control and management device, and the processing unit is configured to randomly select a first moment.

According to a seventh aspect, an embodiment of this application provides a first device, including a communications interface and a processor connected to the communications interface. The first device is configured to perform, by using the communications interface and the processor, the method according to any one of the implementations of the second aspect, or the method according to any one of the implementations of the third aspect.

According to an eighth aspect, an embodiment of this application provides a control and management device, including a communications interface and a processor connected to the communications interface. The control and management device is configured to perform, by using the communications interface and the processor, the method according to any one of the implementations of the fourth aspect.

According to a ninth aspect, an embodiment of this application provides a first device. The first device includes a memory and a processor. The memory is configured to store program code, and the processor is configured to run instructions in the program code, so that the first device performs the method according to any one of the implementations of the second aspect or any one of the implementations of the third aspect.

According to a tenth aspect, an embodiment of this application provides a control and management device. The control and management device includes a memory and a processor. The memory is configured to store program code, and the processor is configured to run instructions in the program code, so that the control and management device performs the method according to any one of the implementations of the fourth aspect.

According to an eleventh aspect, an embodiment of this application provides a computer-readable storage medium. The computer-readable storage medium stores instructions. When the instructions are run on a computer, the computer is enabled to perform the method according to any one of the implementations of the second aspect, or perform the method according to any one of the implementations of the third aspect, or perform the method according to any one of the implementations of the fourth aspect.

### BRIEF DESCRIPTION OF DRAWINGS

To describe the technical solutions in embodiments of this application or in the conventional technology more clearly, the following briefly describes the accompanying drawings for describing the embodiments or the conventional technology. It is clear that the accompanying drawings in the following descriptions show only some embodiments of this application, and persons of ordinary skill in the art may still derive other drawings from these accompanying drawings without creative efforts.
FIG. 1 is a schematic diagram of an example of an application scenario;
FIG. 2 is a signaling interaction diagram of a data reporting method according to an embodiment of this application;
FIG. 3 is a schematic flowchart of a data reporting method according to an embodiment of this application;
FIG. 4 is a schematic flowchart of a data reporting method according to an embodiment of this application;
FIG. 5 is a schematic flowchart of a data reporting method according to an embodiment of this application;
FIG. 6 is a schematic flowchart of a data reporting method according to an embodiment of this application;
FIG. 7 is a schematic flowchart of a data reporting method according to an embodiment of this application;
FIG. 8 is a schematic flowchart of a data obtaining method according to an embodiment of this application;
FIG. 9 is a schematic diagram of a data reporting system according to an embodiment of this application;
FIG. 10 is a schematic diagram of a structure of a first device according to an embodiment of this application;
FIG. 11 is a schematic diagram of a structure of a control and management device according to an embodiment of this application;
FIG. 12 is a schematic diagram of a structure of a first device according to an embodiment of this application;
FIG. 13 is a schematic diagram of a structure of a control and management device according to an embodiment of this application;
FIG. 14 is a schematic diagram of a structure of a first device according to an embodiment of this application; and
FIG. 15 is a schematic diagram of a structure of a control and management device according to an embodiment of this application.

### DESCRIPTION OF EMBODIMENTS

The foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application.

Embodiments of this application provide a data reporting method, to resolve a network congestion problem caused when a network device reports iFIT measurement information to a control and management device, so that a measurement result of an iFIT technology is more accurate.

For ease of understanding, an example application scenario of embodiments of this application is first described.

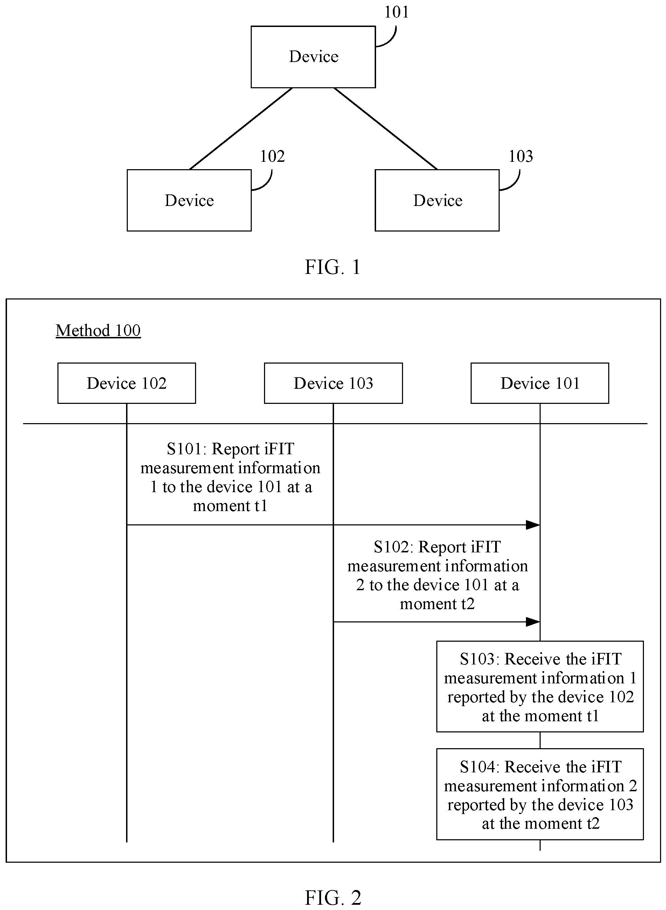

FIG. 1 is a schematic diagram of an example of an application scenario. The scenario shown in FIG. 1 includes a device 101, a device 102, and a device 103. The device 101 may be a control and management device, the device 102 and the device 103 may be network devices that belong to a same network, and the device 101 may control and manage the device 102 and the device 103. The network device mentioned in embodiments of this application includes but is not limited to a device such as a router or a switch. The control and management device may be, for example, a device running network management software, or may be, for example, a controller. This is not specifically limited in embodiments of this application.

The device 101, the device 102, and the device 103 may be devices to which an iFIT technology is applied. Both the device 102 and the device 103 may periodically send iFIT measurement information to the device 101, and cycles in which the device 102 and the device 103 report the iFIT measurement information to the device 101 are the same. Usually, the device 101 delivers the cycle to the device 102 and the device 103. For example, before the iFIT technology is applied, time synchronization may be performed on the device 102 and the device 103. After the time synchronization is completed, the device 101 may send a reporting cycle of iFIT measurement information to the device 102 and the device 103. The device 102 and the device 103 may periodically report iFIT measurement information to the device 101 based on the received cycle. A first reporting cycle is used as an example. The device 102 and the device 103 may report iFIT measurement information of the device 102 and iFIT measurement information of the device 103 to the device 101 together at a moment t0 in the first reporting cycle. Reporting together means that iFIT measurement information is continuously sent to the device 101 at a specified rate until all information is reported. The iFIT measurement information mentioned in embodiments of this application is information that the iFIT technology indicates the device 102 to report to the device 101. Specific content of the iFIT measurement information is not specifically limited in embodiments of this application.

The first reporting cycle is described herein by using an example. It is assumed that the reporting cycle is T. After the device 101 sends the reporting cycle of iFIT measurement information to the device 102 and the device 103, a time period corresponding to the 1^{st} reporting cycle is (tm, tm+T), and a time period corresponding to the 2^{nd} reporting cycle is (tm+T, tm+2^{∗}T). By analogy, a time period corresponding to the n^{th} reporting cycle is (tm+(n-1)^{∗}T, tm+n^{∗}T), where tm is a start moment of the 1^{st} reporting cycle, and the start moment may be, for example, a moment after the device 102 or the device 103 receives the previous reporting cycle. The first reporting cycle mentioned in embodiments of this application may be a reporting cycle corresponding to a time period (tm+(i-1)^{∗}T, tm+i^{∗}T), where i is an integer greater than or equal to 1. The foregoing moment t0 is usually a moment close to a start moment of a reporting cycle.

Although devices that report iFIT measurement information to the device 101 in FIG. 1 include only the device 102 and the device 103, in actual application, there may be a large quantity of devices that report iFIT measurement information to the device 101, for example, there are 10,000 devices in the network that need to report iFIT measurement information to the device 101. If the 10,000 devices all report iFIT measurement information to the device 101 at the moment t0, the device 101 receives a large amount of iFIT measurement information in a short time near the moment t0. However, because a data receiving capability of the device 101 is limited, when there is a large amount of to-be-received data, the data receiving capability of the device 101 is inadequate to receive all the to-be-received iFIT measurement information, causing network congestion. Once the network is congested, a packet loss of the iFIT measurement information that is reported to the device 101 may occur. Therefore, integrity of iFIT measurement information received by the device 101 is affected, and accuracy of a measurement result of the iFIT technology is further affected.

To resolve this problem, an embodiment of this application provides a data reporting method 100. The following describes the method with reference to FIG. 1 and FIG. 2. FIG. 2 is a signaling interaction diagram of a data reporting method according to an embodiment of this application. The data reporting method shown in FIG. 2 may be implemented, for example, by using the following S101 and S102.

S101: The device 102 reports iFIT measurement information 1 to the device 101 at a moment t1.

S102: The device 103 reports iFIT measurement information 2 to the device 101 at a moment t2.

As described above, the device 102 and the device 103 may periodically send iFIT measurement information to the device 101. In addition, reporting cycles corresponding to the device 102 and the device 103 are the same. Implementations in which the device 102 reports iFIT measurement information to the device 101 in all reporting cycles are similar, and implementations in which the device 103 reports iFIT measurement information to the device 101 in all reporting cycles are also similar. In this embodiment of this application, a first reporting cycle is used as an example for description. The first reporting cycle is one of reporting cycles in which the device 102 and the device 103 periodically report iFIT measurement information to the device 101.

In this embodiment of this application, the moment t1 is a moment in the first reporting cycle, the moment t2 is also a moment in the first reporting cycle, and the moment t1 is different from the moment t2. In other words, in embodiments of this application, the device 102 and the device 103 separately report iFIT measurement information to the device 101 at two different moments in the first reporting cycle.

S103: The device 101 receives the iFIT measurement information 1 reported by the device 102 at the moment t1.

S104: The device 101 receives the iFIT measurement information 2 reported by the device 103 at the moment t2.

After the device 102 sends the iFIT measurement information 1 to the device 101, the device 101 may receive the iFIT measurement information 1 sent by the device 102. Similarly, after the device 103 sends the iFIT measurement information 2 to the device 101, the device 101 may receive the iFIT measurement information 2 sent by the device 103.

It can be learned from the foregoing descriptions that, for the first reporting cycle, because the device 102 and the device 103 report the iFIT measurement information to the device 101 at different moments, correspondingly, the device 101 may receive the iFIT measurement information 1 and the iFIT measurement information 2 at different moments. In this way, the device 101 does not receive a large amount of iFIT measurement information in a short time, so that a data receiving capability of the device 101 is adequate to match to-be-received iFIT measurement information. Correspondingly, network congestion is avoided, and a packet loss of iFIT measurement information is avoided. Therefore, the iFIT measurement information received by the device 101 is more complete, and a measurement result of an iFIT technology is more accurate.

In an embodiment of this application, for the purpose of enabling the device 102 and the device 103 to report iFIT measurement information to the device 101 at different moments in the first reporting cycle, the device 102 may determine, based on a first reporting condition, a moment for reporting iFIT measurement information to the device 101, and correspondingly, the device 103 may determine, based on a second reporting condition, a moment for reporting iFIT measurement information to the device 101. The reporting moment determined by the device 102 based on the first reporting condition is different from the reporting moment determined by the device 103 based on the second reporting condition. Therefore, the device 102 and the device 103 separately report iFIT measurement information to the device 101 at two different moments in the first reporting cycle. In other words, the moment t1 meets the first reporting condition, and the moment t2 meets the second reporting condition.

In this embodiment of this application, that the moment t1 meets the first reporting condition may include two cases. The following separately describes the two cases in detail.

In a first case, a remainder obtained by dividing a value corresponding to a first time unit at the moment t1 by a first value is equal to a remainder obtained by dividing a unique identifier of the device 102 by the first value, the first value is less than or equal to a cycle for the device 102 to report iFIT measurement information to the device 101, and a unit of the cycle is the first time unit.

In this embodiment of this application, the first time unit is a unit of the cycle for the device 102 to report iFIT measurement information to the device 101. The first time unit may be, for example, second, or the first time unit may be, for another example, millisecond. This is not specifically limited in this embodiment of this application. For the value corresponding to the first time unit at the moment t1, an example is used for description herein. If the first time unit is second, the value corresponding to the first time unit at the moment t1 is a number of a second corresponding to the moment t1. For example, if the moment t1 is 16:56:15, the value corresponding to the first time unit at the moment t1 is 15.

The unique identifier of the device 102 may be used to identify the device 102. For a device, a loopback (loopback) address of the device, a MAC address of the device, and a router identifier (router ID) of the device all may be used to identify the device. Therefore, the unique identifier of the device 102 may be a loopback address of the device 102, a MAC address of the device 102, or a router ID of the device 102. In addition, in some embodiments, although time synchronization is performed on the device 102 and the device 103, protocols used for the time synchronization are different, and precision of the time synchronization is also different. If the Network Time Protocol (Network Time Protocol, NTP) is used for the time synchronization, precision of the time synchronization can reach 1 millisecond. If the Institute of Electrical and Electronics Engineers (Institute of Electrical and Electronics Engineers, IEEE) 1588 protocol is used for the time synchronization, precision of the time synchronization can reach 10 nanoseconds. Therefore, last N digits of a local nanosecond moment of a device, especially the last one digit of the local nanosecond moment, may also be used to identify the device. In view of this, the unique identifier of the device 102 may alternatively be last N digits of a local nanosecond moment of the device 102. In an embodiment, a value of N may be 1.

The device 102 may determine, based on a first cycle, whether a local moment of the device 102 meets the first reporting condition. If the local moment meets the first reporting condition, the local moment is determined as the moment t1. Specifically, the device 102 may divide a value corresponding to the first time unit at the local moment by the first value, to obtain a first remainder. Then, a network device may determine whether the first remainder is equal to a second remainder, where the second remainder is the remainder obtained by dividing the unique identifier of the device 102 by the first value. It may be understood that the second remainder is a value corresponding to the unique identifier of the device 102. The first cycle may be determined based on an actual situation, provided that the first cycle is less than one first time unit. For example, if the first time unit is second, the first cycle is less than 1 second. Because the first cycle is less than one first time unit, it can be ensured that the moment t1 that meets the first reporting condition is determined in the first reporting cycle.

In this embodiment of this application, in each reporting cycle, the device 102 may perform steps of calculating the first remainder and determining whether the first remainder is equal to the second remainder, to determine a moment t1 corresponding to each reporting cycle. Certainly, after determining a moment t1 corresponding to the 1^{st} reporting cycle, the device 102 may alternatively no longer continue to perform the steps of calculating the first remainder and determining whether the first remainder is equal to the second remainder, but periodically report iFIT measurement information to the device 101 based on the moment t1 corresponding to the 1^{st} reporting cycle and the cycle for the device 102 to report iFIT measurement information to the device 101. For example, the cycle for the device 101 to report iFIT measurement information is 10 seconds. In the 1^{st} reporting cycle, the device 102 reports iFIT measurement information to the device 101 at the fifth second. Then, the device 102 may separately report iFIT measurement information to the device 101 at the (5+n^{∗}10)^{th} second, where n is an integer greater than or equal to 1.

In a second case, the moment t1 is a moment randomly selected by the device 102.

In this embodiment of this application, the device 102 may randomly select a moment in the first reporting cycle, and report iFIT measurement information at the randomly selected moment.

In this embodiment of this application, the device 102 may generate a random number. A value of the random number is less than a cycle for the device 102 to report iFIT measurement information to the device 101. The random number is used to indicate a relative location of a moment at which the device 102 reports iFIT measurement information to the device 101 in the first reporting cycle. For example, the cycle for the device 102 to report iFIT measurement information to the device 101 is 10 seconds, and the random number may be 5. This indicates that the device 102 reports iFIT measurement information to the device 101 at the fifth second in a reporting cycle. After generating the random number, the device 102 may determine, based on a first cycle, whether a local moment of the device 102 is a reporting moment randomly selected by the device 102. Specifically, the device 102 may subtract a start moment in the first reporting cycle from the local moment, to obtain a difference between the two moments. If a value of the first time unit in the difference between the two moments is equal to the random number generated by the device 102, it is determined that the local moment meets the first reporting condition, and the local moment is determined as the moment t1. For example, the difference between the two moments is 5 seconds and 300 milliseconds, and the value of the first time unit is 5, which is equal to the random number generated by the device 102. Therefore, the device 102 can determine that the local moment meets the first reporting condition, and determine the local moment as the moment t1.

In this embodiment of this application, similar to that the moment t1 meets the first reporting condition, that the moment t2 meets the second reporting condition may also include a plurality of cases. The following separately describes the plurality of cases in detail.

In a first case, a remainder obtained by dividing a value corresponding to the first time unit at the moment t2 by the first value is equal to a remainder obtained by dividing a unique identifier of the device 103 by the first value, the first value is less than or equal to a cycle for the device 103 to report iFIT measurement information to the device 101, and a unit of the cycle is the first time unit.

For the first time unit, the first value, and the cycle for the device 103 to report iFIT measurement information to the device 101, refer to the foregoing descriptions that the moment t1 meets the first reporting condition. Details are not described herein again.

Similar to the unique identifier of the device 102, the unique identifier of the device 103 may be a loopback address of the device 103, a MAC address of the device 103, a router ID of the device 103, or last N digits of a local nanosecond moment of the device 103. In an embodiment, a value of N may be 1.

The device 103 may determine, based on a second cycle, whether a local moment of the device 103 meets the second reporting condition. If the local moment meets the second reporting condition, the local moment is determined as the moment t2. Specifically, the device 103 may divide a value corresponding to the first time unit at the local moment by the first value, to obtain a third remainder. Then, a network device may determine whether the third remainder is equal to a fourth remainder, where the fourth remainder is the remainder obtained by dividing the unique identifier of the device 103 by the first value. The fourth remainder is a value corresponding to the unique identifier of the device 103. Similar to the first cycle, the second cycle may be determined based on an actual situation, provided that the second cycle is less than one first time unit. For example, if the first time unit is second, the second cycle is less than 1 second. Because the second cycle is less than one first time unit, it can be ensured that the moment t2 that meets the second reporting condition is determined in the first reporting cycle.

In this embodiment of this application, in each reporting cycle, the device 103 may perform steps of calculating the third remainder and determining whether the third remainder is equal to the fourth remainder, to determine a moment t2 corresponding to each reporting cycle. Certainly, after determining a moment t2 corresponding to the 1^{st} reporting cycle, the device 103 may alternatively no longer continue to perform the steps of calculating the third remainder and determining whether the third remainder is equal to the fourth remainder, but periodically report iFIT measurement information to the device 101 based on the moment t2 corresponding to the 1^{st} reporting cycle and the cycle for the device 103 to report iFIT measurement information to the device 101. For example, the cycle for the device 103 to report iFIT measurement information is 10 seconds. In the 1^{st} reporting cycle, the device 103 reports iFIT measurement information to the device 101 at the seventh second. Then, the device 103 may separately report iFIT measurement information to the device 101 at the (7+n^{∗}10)^{th} second, where n is an integer greater than or equal to 1.

In a second case, the moment t2 is a moment randomly selected by the device 103.

In this embodiment of this application, the device 103 may randomly select a moment in the first reporting cycle, and report iFIT measurement information at the randomly selected moment.

In this embodiment of this application, the device 103 may generate a random number. A value of the random number is less than a cycle for the device 103 to report iFIT measurement information to the device 101. The random number is used to indicate a relative location of a moment at which the device 103 reports iFIT measurement information to the device 101 in the first reporting cycle. For example, the cycle for the device 103 to report iFIT measurement information to the device 101 is 10 seconds, and the random number may be 7. This indicates that the device 103 reports iFIT measurement information to the device 101 at the seventh second in a reporting cycle. After generating the random number, the device 103 may determine, based on a second cycle, whether a local moment of the device 103 is a reporting moment randomly selected by the device 103. Specifically, the device 103 may subtract the start moment in the first reporting cycle from the local moment, to obtain a difference between the two moments. If a value of the first time unit in the difference between the two moments is equal to the random number generated by the device 103, it is determined that the local moment meets the second reporting condition, and the local moment is determined as the moment t2.

It may be understood that, in actual application, there may be the following four combinations in which the device 102 determines the moment t1 and the device 103 determines the moment t2.

First combination: The remainder obtained by dividing the value corresponding to the first time unit at the moment t1 by the first value is equal to the remainder obtained by dividing the unique identifier of the device 102 by the first value, and the remainder obtained by dividing the value corresponding to the first time unit at the moment t2 by the first value is equal to the remainder obtained by dividing the unique identifier of the device 103 by the first value.

In actual application, time synchronization is performed on the device 102 and the device 103, and the first time unit is usually second or millisecond. Therefore, a value of the first time unit at the local moment of the device 102 is the same as a value of the first time unit at the local moment of the device 103. In addition, the unique identifier of the device 102 is usually not equal to the unique identifier of the device 103, and therefore, the remainder obtained by dividing the unique identifier of the device 102 by the first value is usually different from the remainder obtained by dividing the unique identifier of the device 103 by the first value. Therefore, when the device 102 and the device 103 respectively determine the moment t1 and the moment t2 by using the first combination, the determined moment t1 is different from the determined moment t2. Therefore, the device 102 and the device 103 can report iFIT measurement information to the device 101 at different moments. This avoids a problem caused when the device 102 and the device 103 report iFIT measurement information to the device 101 at a same moment.

Second combination: The moment t1 is a moment randomly selected by the device 102, and the moment t2 is a moment randomly selected by the device 103.

In this embodiment of this application, for example, the device 102 may randomly select the moment t1 from a first time period in the first reporting cycle, and the device 103 may randomly select the moment t2 from a second time period in the first reporting cycle. The first time period and the second time period do not overlap, and therefore, it is ensured that the moment t1 is different from the moment t2. Certainly, the time period in which the device 102 randomly selects the moment t1 and the time period in which the device 103 randomly selects the moment t2 may alternatively not be limited, because there is a high probability that the moment t1 randomly selected by the device 102 is different from the moment t2 randomly selected by the device 103.

Third combination: The remainder obtained by dividing the value corresponding to the first time unit at the moment t1 by the first value is equal to the remainder obtained by dividing the unique identifier of the device 102 by the first value, and the moment t2 is a moment randomly selected by the device 103.

Fourth combination: The moment t1 is a moment randomly selected by the device 102, and the remainder obtained by dividing the value corresponding to the first time unit at the moment t2 by the first value is equal to the remainder obtained by dividing the unique identifier of the device 103 by the first value.

For the third combination and the fourth combination, there is a low probability that the moment t1 determined by the device 102 is the same as the moment t2 determined by the device 103. Therefore, the third combination and the fourth combination may also be used to basically ensure that the moment t1 is different from the moment t2.

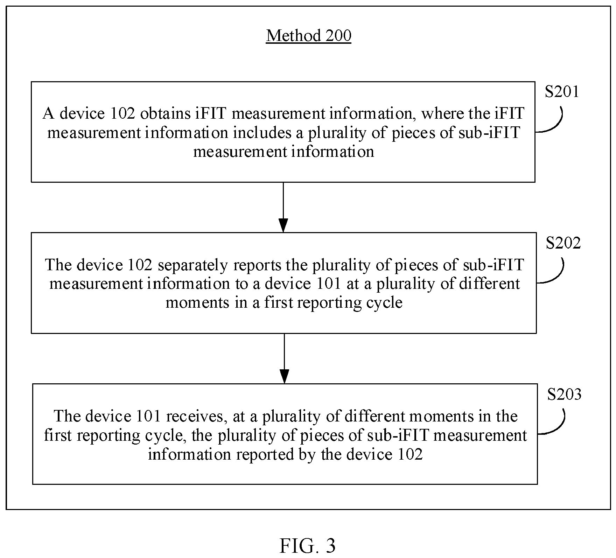

In an embodiment of this application, for the purpose of avoiding that the device 101 receives a large amount of iFIT measurement information in a short time, a device that reports iFIT measurement information to the device 101, for example, the device 102 and the device 103 shown in FIG. 1, may alternatively perform a data reporting method 200 shown in FIG. 3. FIG. 3 is a schematic flowchart of a data reporting method according to an embodiment of this application. The following describes the method with reference to FIG. 3. The method shown in FIG. 3 may be implemented, for example, by using S201 and S202.

S201: The device 102 obtains iFIT measurement information, where the iFIT measurement information includes a plurality of pieces of sub-iFIT measurement information.

S202: The device 102 separately reports the plurality of pieces of sub-iFIT measurement information to the device 101 at a plurality of different moments in a first reporting cycle.

S203: The device 101 receives, at a plurality of different moments in the first reporting cycle, the plurality of pieces of sub-iFIT measurement information reported by the device 102.

For S201 and S202, it should be noted that in this embodiment of this application, the device 102 no longer reports all iFIT measurement information to the device 101 at a time, but divides the iFIT measurement information into a plurality of pieces of sub-iFIT measurement information and separately reports the plurality of pieces of sub-iFIT measurement information to the device 101. Separate reporting means that the device 102 separately reports, to the device 101 at a plurality of moments, iFIT measurement information that needs to be reported in a reporting cycle, and reports a part of the iFIT measurement information at one moment. The iFIT measurement information reported at each moment may also be referred to as sub-iFIT measurement information.

In this way, if each device that reports iFIT measurement information to the device 101 uses the separate reporting manner described in S201 and S202, the device 101 does not receive a large amount of iFIT measurement information in a short time near a moment t0, so that a data receiving capability of the device 101 is adequate to match to-be-received iFIT measurement information. This avoids network congestion, and correspondingly, avoids a packet loss of iFIT measurement information caused by the network congestion. Therefore, the device 101 can receive complete iFIT measurement information. This ensures accuracy of a measurement result of an iFIT technology. For separate reporting, in an embodiment, the device 102 may report iFIT measurement information to the device 101 at a moment t3 and a moment t4 in the first reporting cycle. Specifically, the device 102 may report a part of the obtained iFIT measurement information to the device 101 at the moment t3, and report the other part of the obtained iFIT measurement information to the device 101 at the moment t4. For ease of description, the iFIT measurement information reported by the device 102 to the device 101 at the moment t3 is referred to as first iFIT measurement information, and the iFIT measurement information reported by the device 102 to the device 101 at the moment t4 is referred to as second iFIT measurement information. It is assumed that the moment t3 is earlier than the moment t4. In an embodiment, there is a specific time difference between the moment t3 and the moment t4. It takes a specific time for the device 102 to report the first iFIT measurement information to the device 101, and a moment at which the device 102 ends reporting the first iFIT measurement information is earlier than the moment t4. After reporting the first iFIT measurement information to the device 101, the device 102 waits until the moment t4 arrives and then continues to report the second iFIT measurement information to the device 101. It may be understood that, in this case, a moment at which the device 101 receives the first iFIT measurement information is also earlier than a moment at which the device 101 receives the second iFIT measurement information. In addition, there may be a specific time difference between the moment at which the device 101 receives the first iFIT measurement information and the moment at which the device 101 receives the second iFIT measurement information. That is, the device 101 may not need to receive a large amount of iFIT measurement information in a short time, for example, in a short time near the moment t0.

A manner of determining the moment t3 and the moment t4 is not specifically limited in this embodiment of this application. In an embodiment, the moment t3 and the moment t4 may be moments randomly selected by the device 102.

For a specific implementation in which the device 102 obtains iFIT measurement information, a conventional manner of obtaining iFIT measurement information may be used. Details are not described herein.

It may be understood that if each device that reports iFIT measurement information to the device 101 performs the data reporting method shown in FIG. 3, the device 101 does not receive a large amount of iFIT measurement information in a short time. Correspondingly, a problem caused when the device 101 receives a large amount of iFIT measurement information in a short time near the moment t0 can be avoided.

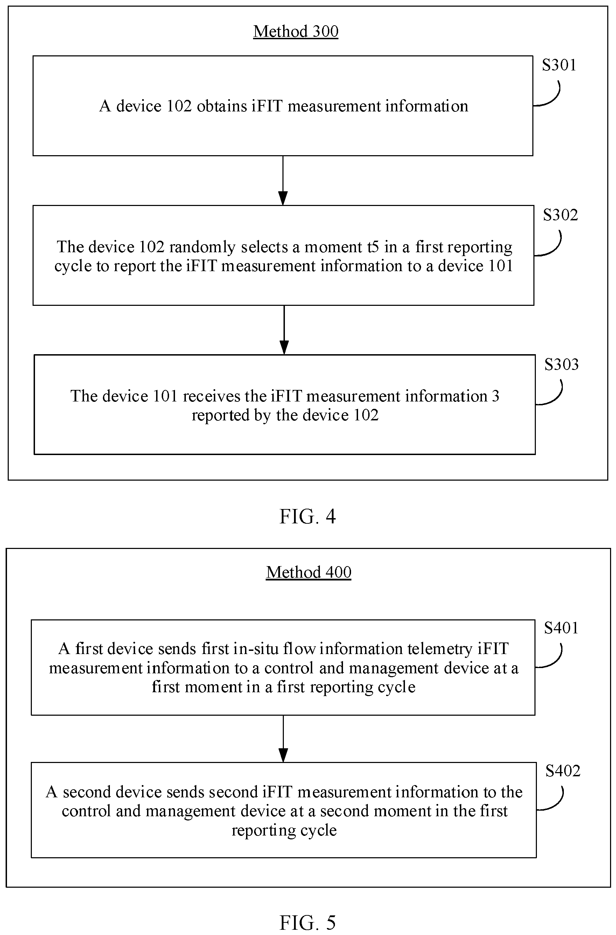

In another embodiment of this application, for the purpose of avoiding that the device 101 receives a large amount of iFIT measurement information in a short time, a device that reports iFIT measurement information to the device 101, for example, the device 102 and the device 103 shown in FIG. 1, may alternatively perform a data reporting method 300 shown in FIG. 4. FIG. 4 is a schematic flowchart of a data reporting method according to an embodiment of this application. The following describes the method with reference to FIG. 4. The method shown in FIG. 4 may be implemented, for example, by using S301 and S302.

S301: The device 102 obtains iFIT measurement information 3.

S302: The device 102 randomly selects a moment t5 in a first reporting cycle to report the iFIT measurement information 3 to the device 101.

S303: The device 101 receives the iFIT measurement information 3 reported by the device 102.

In this embodiment of this application, when reporting the iFIT measurement information 3 to the device 101, the device 102 may randomly select a moment in the first reporting cycle, and report the iFIT measurement information 3 to the device 101 at the randomly selected moment.

It may be understood that if each device that reports iFIT measurement information to the device 101 performs the data reporting method shown in FIG. 4, there is a low probability that all devices randomly select a same moment. In this way, there is a low probability that the device 101 receives, at very close moments, iFIT measurement information reported by all the devices. Therefore, the solution shown in FIG. 4 can avoid that the device 101 receives a large amount of iFIT measurement information in a short time near a moment t0. Correspondingly, a problem caused when the device 101 receives a large amount of iFIT measurement information in a short time can be avoided.

In an embodiment, the device 102 may report, to the device 101 at the moment t5, all iFIT measurement information that needs to be reported in the first reporting cycle. Certainly, the device 102 may alternatively report, to the device 101 at the moment t5, a part of the iFIT measurement information that needs to be reported in the first reporting cycle, and report the other part of the iFIT measurement information to the device 101 at another moment in the first reporting cycle. In other words, the iFIT measurement information 3 mentioned in S301 may be complete iFIT measurement information that needs to be reported by the device 102 to the device 101 in the first reporting cycle, or may be a part of complete iFIT measurement information that needs to be reported by the device 102 to the device 101 in the first reporting cycle. When the iFIT measurement information 3 is a part of complete iFIT measurement information that needs to be reported by the device 102 to the device 101 in the first reporting cycle, the iFIT measurement information that needs to be reported by the device 102 in the first reporting cycle may include a plurality of pieces of sub-iFIT measurement information, and the iFIT measurement information 3 is one of the plurality of pieces of sub-iFIT measurement information. The device 102 reports the iFIT measurement information 3 to the device 101 at the randomly selected moment t5, and reports the other sub-iFIT measurement information to the device 101 at one or more other moments.

In an embodiment, if the iFIT measurement information 3 is a part of complete iFIT measurement information that needs to be reported by the device 102 to the device 101 in the first reporting cycle, during specific implementation, for example, S301 may be as follows: The device 102 obtains the complete iFIT measurement information that needs to be reported by the device 102 to the device 101 in the first reporting cycle, and then the device 102 obtains the iFIT measurement information 3 according to the obtained complete iFIT measurement information. For example, the device 102 may divide the complete iFIT measurement information into several parts, and obtain one part of the iFIT measurement information as the iFIT measurement information 3.

In an embodiment, in addition to the iFIT measurement information 3, the plurality of pieces of sub-iFIT measurement information further include iFIT measurement information 4. To be specific, the device 102 divides the complete iFIT measurement information into two parts. One part is the iFIT measurement information 3 mentioned in S301, and the other part is the iFIT measurement information 4. In this case, the device 102 may report the iFIT measurement information 4 to the device 101 at a moment t6.

In a possible implementation, the device 102 may report the iFIT measurement information 4 to the device 101 at the moment t6 when the moment t6 meets a third reporting condition. That the moment t6 meets the third reporting condition is similar to that the moment t1 meets the first reporting condition, and may include two cases.

In a first case, a remainder obtained by dividing a value corresponding to a first time unit at the moment t6 by a second value is equal to a remainder obtained by dividing a unique identifier of the device 102 by the second value, the second value is less than or equal to a cycle for the device 102 to report iFIT measurement information to the device 101, and a unit of the cycle is the first time unit.

A principle of the first case in which the moment t6 meets the third reporting condition is similar to that of the first case in which the moment t1 meets the first reporting condition. Therefore, details are not described herein again. For related descriptions, refer to a description part of the first case in which the moment t1 meets the first reporting condition. For the second value, it should be noted herein that a specific value of the second value is not limited in this embodiment of this application. In some embodiments, the second value may be the same as the first value, or in some embodiments, the second value may be different from the first value.

In a second case, the moment t6 is a moment randomly selected by the device 102.

For a specific implementation in which the device 102 randomly selects the moment t6, refer to the foregoing specific descriptions that the device 102 randomly selects the moment t1. Details are not described herein again.

It may be understood that, a manner of randomly selecting a reporting moment in combination with separate reporting can effectively avoid that all devices that report iFIT measurement information to the device 101 report the iFIT measurement information to the device 101 together at a moment. This reduces an occurrence possibility of network congestion, reduces a packet loss rate of iFIT measurement information, and improves accuracy of a result of an iFIT technology.

In this embodiment of this application, the device 102 may report iFIT measurement information to the device 101 in each reporting cycle in the random reporting manner shown in FIG. 4. In other words, for a second reporting cycle different from the first reporting cycle, the device 102 may obtain iFIT measurement information 5, and randomly select a moment t7 in the second reporting cycle to report the iFIT measurement information 5 to the device 101. Correspondingly, the device 101 may correspondingly receive the iFIT measurement information 5.

It should be noted that, in this embodiment of this application, the device 103 may alternatively report iFIT measurement information to the device 101 in a random reporting manner. Specifically, the device 103 may obtain iFIT measurement information 6, and randomly select a moment t8 in the first reporting cycle to report the iFIT measurement information 6 to the device 101. Correspondingly, in addition to performing S303, the device 101 may further receive the iFIT measurement information 6 reported by the device 103.

The iFIT measurement information 6 may be complete iFIT measurement information that needs to be reported by the device 103 to the device 101 in the first reporting cycle, or may be a part of complete iFIT measurement information that needs to be reported by the device 103 to the device 101 in the first reporting cycle. When the iFIT measurement information 6 is a part of complete iFIT measurement information that needs to be reported by the device 103 to the device 101 in the first reporting cycle, in addition to the iFIT measurement information 6, the complete iFIT measurement information that needs to be reported by the device 103 to the device 101 in the first reporting cycle further includes iFIT measurement information 7. To be specific, the device 103 divides the complete iFIT measurement information into two parts. One part is the iFIT measurement information 6, and the other part is the iFIT measurement information 7. In this case, the device 102 may report the iFIT measurement information 7 to the device 101 at a moment t8.

In a possible implementation, the device 103 may report the iFIT measurement information 7 to the device 101 at the moment t7 when the moment t7 meets a fourth reporting condition. That the moment t7 meets the fourth reporting condition is similar to that the moment t1 meets the first reporting condition, and may include two cases.

In a first case, a remainder obtained by dividing a value corresponding to the first time unit at the moment t7 by the second value is equal to a remainder obtained by dividing a unique identifier of the device 103 by the second value, the second value is less than or equal to a cycle for the device 103 to report iFIT measurement information to the device 101, and a unit of the cycle is the first time unit.

A principle of the first case in which the moment t7 meets the fourth reporting condition is similar to that of the first case in which the moment t1 meets the first reporting condition. Therefore, details are not described herein again. For related descriptions, refer to a description part of the first case in which the moment t1 meets the first reporting condition.

In a second case, the moment t7 is a moment randomly selected by the device 103. For a specific implementation in which the device 103 randomly selects the moment t7, refer to the foregoing specific descriptions that the device 103 randomly selects the moment t2. Details are not described herein again.

An embodiment of this application further provides a data reporting method 400. FIG. 5 is a schematic flowchart of a data reporting method according to an embodiment of this application. The following describes the method with reference to FIG. 5. The method shown in FIG. 5 may be implemented, for example, by using S401 and S402.

S401: A first device sends first in-situ flow information telemetry iFIT measurement information to a control and management device at a first moment in a first reporting cycle.

S402: A second device sends second iFIT measurement information to the control and management device at a second moment in the first reporting cycle.

The first reporting cycle is a cycle for the first device and the second device to report iFIT measurement information to the control and management device, and the first moment is different from the second moment.

The method 400 may be used to implement the steps performed by the device 102 and the device 103 in the method 100 mentioned in the foregoing embodiment. When the method 400 is used to implement the steps performed by the device 102 and the device 103 in the method 100 mentioned in the foregoing embodiment, the first device may correspond to the device 102 in the method 100, the second device may correspond to the device 103 in the method 100, and the control and management device may correspond to the device 101 in the method 100. The first moment corresponds to the moment t1 in the method 100, and the second moment corresponds to the moment t2 in the method 100. The first iFIT measurement information corresponds to the iFIT measurement information 1 in the method 100, and the second iFIT measurement information corresponds to the iFIT measurement information 2 in the method 100.

In an implementation, a remainder obtained by dividing a value corresponding to a first time unit at the first moment by a first value is equal to a remainder obtained by dividing a unique identifier of the first device by the first value, the first value is an integer less than or equal to a cycle for the first device to report iFIT measurement information to the control and management device, and a unit of the cycle is the first time unit. In another implementation, the first moment is a moment randomly selected by the first device.

In an implementation, a remainder obtained by dividing a value corresponding to the first time unit at the second moment by the first value is equal to a remainder obtained by dividing a unique identifier of the second device by the first value, the first value is an integer less than or equal to a cycle for the second device to report iFIT measurement information to the control and management device, and a unit of the cycle is the first time unit. In another implementation, the second moment is a moment randomly selected by the second device.

In an implementation, the unique identifier includes any one of the following: a loopback address of a device, a media access control MAC address of the device, a router identifier of the device, and last N digits of a local nanosecond moment of the device, where N is greater than or equal to 1.

For specific implementation of the method 400, refer to the descriptions of the method 100 in the foregoing embodiment. Details are not described herein again.

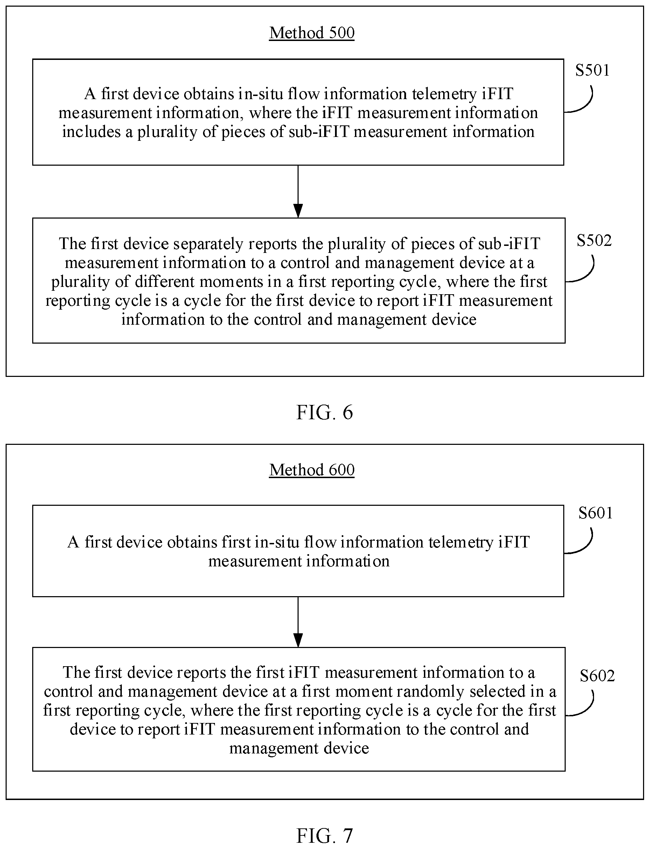

An embodiment of this application further provides a data reporting method 500. FIG. 6 is a schematic flowchart of a data reporting method according to an embodiment of this application. The following describes the method with reference to FIG. 6. The method shown in FIG. 6 may be implemented, for example, by using S501 and S502.

S501: A first device obtains in-situ flow information telemetry iFIT measurement information, where the iFIT measurement information includes a plurality of pieces of sub-iFIT measurement information.

S502: The first device separately reports the plurality of pieces of sub-iFTT measurement information to a control and management device at a plurality of different moments in a first reporting cycle, where the first reporting cycle is a cycle for the first device to report iFIT measurement information to the control and management device.

The method 500 may be used to implement the steps performed by the device 102 in the method 200 mentioned in the foregoing embodiment. When the method 500 is used to implement the steps performed by the device 102 in the method 200 mentioned in the foregoing embodiment, the first device may correspond to the device 102 in the method 200, and the control and management device may correspond to the device 101 in the method 100.

In an implementation, the plurality of pieces of sub-iFIT measurement information include first iFIT measurement information and second iFIT measurement information, and that the first device separately reports the plurality of pieces of sub-iFTT measurement information to a control and management device at a plurality of different moments in a first reporting cycle includes: The first device reports the first iFIT measurement information to the control and management device at a first moment in the first reporting cycle, and reports the second iFIT measurement information to the control and management device at a second moment in the first reporting cycle, where the first moment is different from the second moment. When the method 500 is used to implement the method 200 mentioned in the foregoing embodiment, the first moment may correspond to the moment t3 in the method 200, and the second moment may correspond to the moment t4 in the method 200.

In an implementation, the first moment is a moment randomly selected by the first device in the first reporting cycle.

In an implementation, the second moment is a moment randomly selected by the first device in the first reporting cycle.

For specific implementation of the method 500, refer to the descriptions of the method 200 in the foregoing embodiment. Details are not described herein again.

An embodiment of this application further provides a data reporting method 600. FIG. 7 is a schematic flowchart of a data reporting method according to an embodiment of this application. The following describes the method with reference to FIG. 7. The method shown in FIG. 7 may be implemented, for example, by using S601 and S602.

S601: A first device obtains first in-situ flow information telemetry iFIT measurement information.

S602: The first device reports the first iFIT measurement information to a control and management device at a first moment randomly selected in a first reporting cycle, where the first reporting cycle is a cycle for the first device to report iFIT measurement information to the control and management device.

The method 600 may be used to implement the steps performed by the device 102 in the method 300 mentioned in the foregoing embodiment. When the method 600 is used to implement the steps performed by the device 102 in the method 300 mentioned in the foregoing embodiment, the first device may correspond to the device 102 in the method 200, the control and management device may correspond to the device 101 in the method 100, the first iFIT measurement information corresponds to the iFIT measurement information 3 in the method 300, and the first moment corresponds to the moment t5 in the method 300.

In an implementation, the method 600 further includes: The first device obtains second iFIT measurement information; and the first device reports the second iFIT measurement information to the control and management device at a second moment randomly selected in a second reporting cycle, where the first reporting cycle and the second reporting cycle are different reporting cycles.

When the method 600 is used to implement the steps performed by the device 102 in the method 300 mentioned in the foregoing embodiment, the second moment may correspond to the moment t7 in the method 300, and the second iFIT measurement information may correspond to the iFIT measurement information 5 in the method 300.

In an implementation, that a first device obtains first in-situ flow information telemetry iFIT measurement information includes: The first device obtains complete in-situ flow information telemetry iFIT measurement information that needs to be reported to the control and management device in the first reporting cycle, where the complete iFIT measurement information includes a plurality of pieces of sub-iFTT measurement information, and the plurality of pieces of sub-iFTT measurement information include the first in-situ flow information telemetry iFIT measurement information. The first device obtains the first iFIT measurement information according to the iFIT measurement information.

In an implementation, the plurality of pieces of sub-iFIT measurement information further include third iFIT measurement information, and the method further includes: The first device obtains the third iFIT measurement information according to the complete iFIT measurement information. The first device reports the third iFIT measurement information to the control and management device at a third moment in the first reporting cycle.

When the method 600 is used to implement the steps performed by the device 102 in the method 300 mentioned in the foregoing embodiment, the third iFIT measurement information may correspond to the iFIT measurement information 4 in the method 300, and the third moment may correspond to the moment t6 in the method 300.

In a possible implementation, the third moment is a moment randomly selected by the first device in the first reporting cycle.

For specific implementation of the method 600, refer to the descriptions of the method 300 in the foregoing embodiment. Details are not described herein again.

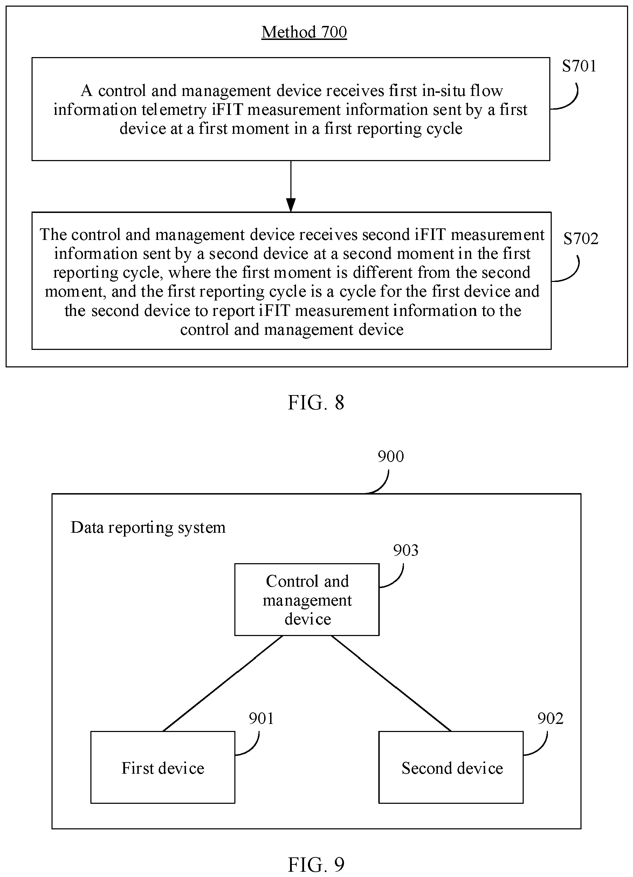

An embodiment of this application further provides a data obtaining method 700. FIG. 8 is a schematic flowchart of a data obtaining method according to an embodiment of this application. The data obtaining method shown in FIG. 8 may be implemented by using the following S701 and S702.

S701: A control and management device receives first in-situ flow information telemetry iFIT measurement information sent by a first device at a first moment in a first reporting cycle.

S702: The control and management device receives second iFIT measurement information sent by a second device at a second moment in the first reporting cycle, where the first moment is different from the second moment, and the first reporting cycle is a cycle for the first device and the second device to report iFIT measurement information to the control and management device.

The method 700 may be used to implement the steps performed by the device 101 in the method 100 mentioned in the foregoing embodiment. When the method 700 is used to implement the steps performed by the device 101 in the method 100 mentioned in the foregoing embodiment, the first device may correspond to the device 102 in the method 100, the second device may correspond to the device 103 in the method 100, and the control and management device may correspond to the device 101 in the method 100. The first moment corresponds to the moment t1 in the method 100, and the second moment corresponds to the moment t2 in the method 100. The first iFIT measurement information corresponds to the iFIT measurement information 1 in the method 100, and the second iFIT measurement information corresponds to the iFIT measurement information 2 in the method 100.

In an implementation, the first moment is a moment randomly selected by the first device in the first reporting cycle. In another implementation, a remainder obtained by dividing a value corresponding to a first time unit at the first moment by a first value is equal to a remainder obtained by dividing a unique identifier of the first device by the first value, the first value is an integer less than or equal to a cycle for the first device to report iFIT measurement information to the control and management device, and a unit of the cycle is the first time unit.

In an implementation, the second moment is a moment randomly selected by the second device in the first reporting cycle. In another implementation, a remainder obtained by dividing a value corresponding to the first time unit at the second moment by the first value is equal to a remainder obtained by dividing a unique identifier of the second device by the first value, the first value is an integer less than or equal to a cycle for the second device to report iFIT measurement information to the control and management device, and a unit of the cycle is the first time unit.

In an implementation, the control and management device may further perform the steps performed by the device 101 in the method 200 provided in the foregoing embodiment. Specifically, the control and management device may be further configured to perform the following steps: The control and management device receives, at a third moment in the first reporting cycle, third iFIT measurement information sent by the first device, where both the first iFIT measurement information and the third iFIT measurement information are sub-iFIT measurement information included in iFIT measurement information that the first device reports to the control and management device in the first reporting cycle. In this case, the control and management device may correspond to the device 101 in the method 200, the first iFIT measurement information in S701 may correspond to the first iFIT measurement information in the method 200, and the third iFIT measurement information mentioned herein may correspond to the second iFIT measurement information in the method 200. The first moment in S701 may correspond to the moment t3 in the method 200, and the third moment mentioned herein may correspond to the moment t4 in the method 200. It may be understood that, in this case, the first iFIT measurement information in S701 is a part of complete iFIT measurement information that needs to be reported by the first device to the control and management device in the first reporting cycle.

In an implementation, the third moment is a moment randomly selected by the second device in the first reporting cycle.

In an implementation, a remainder obtained by dividing a value corresponding to the first time unit at the third moment by a second value is equal to a remainder obtained by dividing the unique identifier of the first device by the second value, the second value is an integer less than or equal to the cycle for the first device to report iFIT measurement information to the control and management device, and the unit of the cycle is the first time unit. If the remainder obtained by dividing the value corresponding to the first time unit at the first moment by the first value is equal to the remainder obtained by dividing the unique identifier of the first device by the second value, the first value and the second value are different. In this way, the first device reports the complete iFIT measurement information to the control and management device in a separate reporting manner.

In an implementation, if the device 103 also performs the method 300 as the device 102 does, the method 700 may further include the following steps: The control and management device receives, at a fourth moment in the first reporting cycle, fourth iFIT measurement information sent by the second device, where both the second iFIT measurement information and the fourth iFIT measurement information are sub-iFIT measurement information included in iFIT measurement information that the second device reports to the control and management device in the first reporting cycle. In this case, the fourth moment may correspond to the moment t8 mentioned in the foregoing embodiment, and the fourth iFIT measurement information may correspond to the iFIT measurement information 6 mentioned in the foregoing embodiment.

In an implementation, the fourth moment is a moment randomly selected by the second device in the first reporting cycle.

In an implementation, a remainder obtained by dividing a value corresponding to the first time unit at the fourth moment by the second value is equal to a remainder obtained by dividing the unique identifier of the second device by the second value, the second value is an integer less than or equal to the cycle for the second device to report iFIT measurement information to the control and management device, and the unit of the cycle is the first time unit. If the remainder obtained by dividing the value corresponding to the first time unit at the second moment by the first value is equal to the remainder obtained by dividing the unique identifier of the first device by the second value, the first value and the second value are different. This ensures that the second moment is different from the fourth moment. In this way, the second device reports the complete iFIT measurement information to the control and management device in a separate reporting manner.

For specific implementation of the method 700, refer to the description part about the steps performed by the device 101 in the foregoing embodiment. Details are not described herein again.

An embodiment of this application further provides a data reporting system. FIG. 9 is a schematic diagram of a data reporting system according to an embodiment of this application. The data reporting system 900 shown in FIG. 9 includes a first device 901, a second device 902, and a control and management device 903.

The first device 901 is configured to send first in-situ flow information telemetry iFIT measurement information to the control and management device at a first moment in a first reporting cycle.

The second device 902 is configured to send second iFIT measurement information to the control and management device at a second moment in the first reporting cycle. The first moment is different from the second moment. The first reporting cycle is a cycle for the first device and the second device to report iFIT measurement information to the control and management device.

The first device may correspond to the device 102 provided in the foregoing embodiments, the second device may correspond to the device 103 provided in the foregoing embodiments, and the control and management device may correspond to the device 101 provided in the foregoing embodiments. The first device 901 may be configured to perform the steps performed by the device 102 in the foregoing embodiments. The second device 902 may be configured to perform the steps performed by the device 103 in the foregoing embodiments. The control and management device 903 may be configured to perform the steps performed by the device 101 in the foregoing embodiments. Therefore, for specific content of the system 900, refer to the description part in the foregoing embodiments, and details are not described herein again.

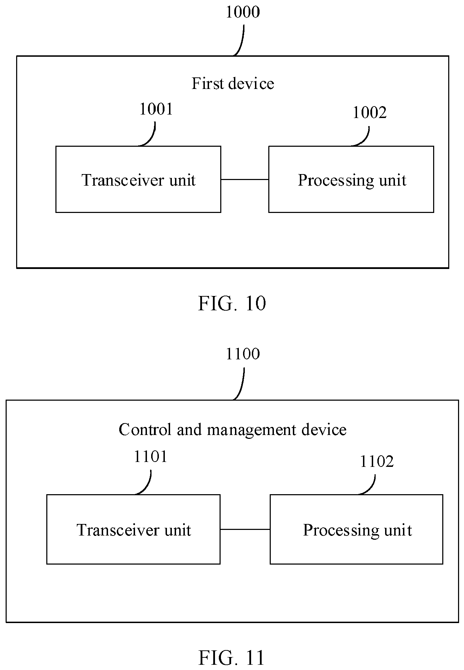

In addition, an embodiment of this application further provides a first device 1000. FIG. 10 is a schematic diagram of a structure of a first device according to an embodiment of this application. The first device 1000 includes a transceiver unit 1001 and a processing unit 1002. The transceiver unit 1001 is configured to perform a sending/receiving operation performed by the device 102 in the embodiment corresponding to the method 200 or the method 300. The processing unit 1002 is configured to perform an operation other than the sending/receiving operation performed by the device 102 in the embodiment corresponding to the method 200 or the method 300. Alternatively, the transceiver unit 1001 is configured to perform a sending/receiving operation performed by the first device in the embodiment corresponding to the method 500 or the method 600. The processing unit 1002 is configured to perform an operation other than the sending/receiving operation performed by the first device in the embodiment corresponding to the method 500 or the method 600. For example, if the first device 1000 is the device 102 in the method 300, the transceiver unit 1001 is configured to send the first iFIT measurement information to the device 101, and the processing unit 1002 is configured to randomly select the moment t5.

In addition, an embodiment of this application further provides a control and management device 1100. FIG. 11 is a schematic diagram of a structure of a control and management device according to an embodiment of this application. The control and management device 1100 includes a transceiver unit 1101 and a processing unit 1102. The transceiver unit 1101 is configured to perform a sending/receiving operation performed by the control and management device in the foregoing embodiments, or is configured to perform a sending/receiving operation performed by the device 101 in the foregoing embodiments. The processing unit 1102 is configured to perform an operation other than the sending/receiving operation performed by the control and management device or the device 101 mentioned in the foregoing embodiments. For example, the transceiver unit 1101 is configured to receive iFIT measurement information from another device such as the device 102, and the processing unit 1102 is configured to analyze and process the received iFIT measurement information.

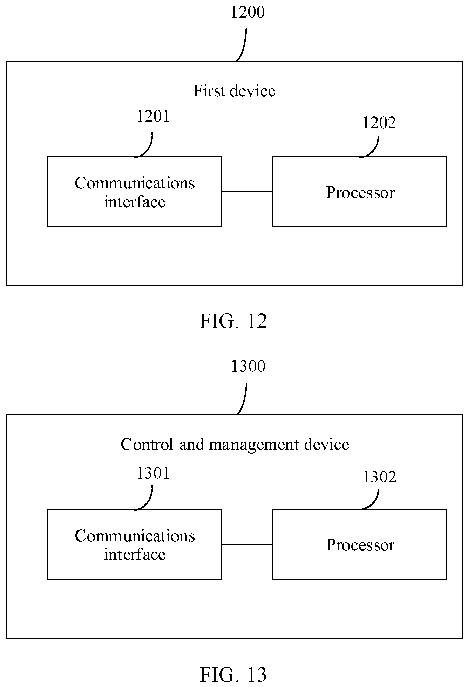

In addition, an embodiment of this application further provides a first device 1200. FIG. 12 is a schematic diagram of a structure of a first device according to an embodiment of this application. The first device 1200 includes a communications interface 1201 and a processor 1202 connected to the communications interface 1201. The communications interface 1201 is configured to perform a sending/receiving operation performed by the device 102 in the embodiment corresponding to the method 200 or the method 300. The processor 1202 is configured to perform an operation other than the sending/receiving operation performed by the device 102 in the embodiment corresponding to the method 200 or the method 300. Alternatively, the communications interface 1201 is configured to perform a sending/receiving operation performed by the first device in the embodiment corresponding to the method 500 or the method 600. The processor 1202 is configured to perform an operation other than the sending/receiving operation performed by the first device in the embodiment corresponding to the method 500 or the method 600. For example, if the first device 1000 is the device 102 in the method 300, the communications interface 1201 is configured to send the first iFIT measurement information to the device 101, and the processor 1202 is configured to randomly select the moment t5.

In addition, an embodiment of this application further provides a control and management device 1300. FIG. 13 is a schematic diagram of a structure of a control and management device according to an embodiment of this application. The control and management device 1300 includes a communications interface 1301 and a processor 1302 connected to the communications interface 1301. The communications interface 1301 is configured to perform a sending/receiving operation performed by the control and management device in the foregoing embodiments, or is configured to perform a sending/receiving operation performed by the device 101 in the foregoing embodiments. The processor 1302 is configured to perform an operation other than the sending/receiving operation performed by the control and management device or the device 101 mentioned in the foregoing embodiments. For example, the communications interface 1301 is configured to receive iFIT measurement information from another device such as the device 102, and the processor 1302 is configured to analyze and process the received iFIT measurement information.

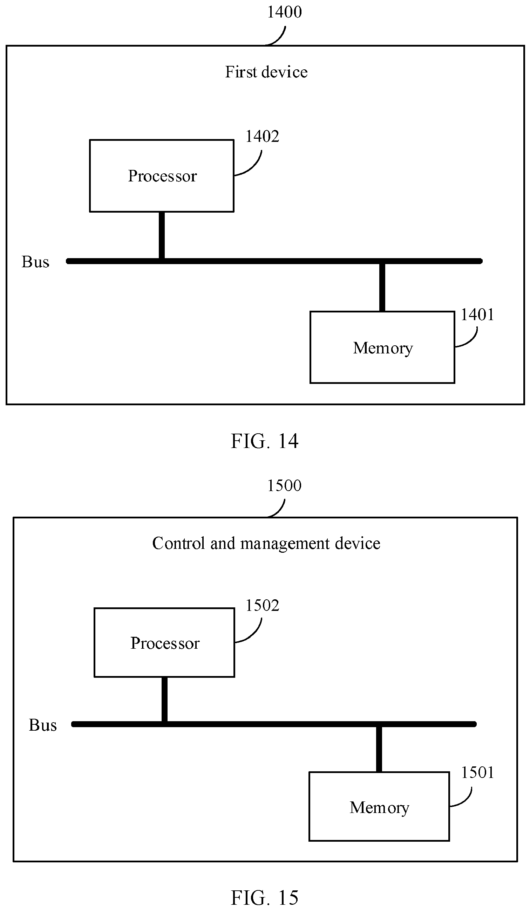

In addition, an embodiment of this application further provides a first device 1400. FIG. 14 is a schematic diagram of a structure of a first device according to an embodiment of this application. The first device 1400 includes a memory 1401 and a processor 1402. The memory 1401 is configured to store program code. The processor 1402 is configured to run instructions in the program code, so that the first device 1400 performs the steps performed by the device 102 in the embodiment corresponding to the method 200 or the method 300, or the first device 1400 performs the steps performed by the first device in the embodiment corresponding to the method 500 or the method 600.

In addition, an embodiment of this application further provides a control and management device 1500. FIG. 15 is a schematic diagram of a structure of a control and management device according to an embodiment of this application. The control and management device 1500 includes a memory 1501 and a processor 1502. The memory 1501 is configured to store program code. The processor 1502 is configured to run instructions in the program code, so that the control and management device 1500 performs a sending/receiving operation performed by the control and management device in the foregoing embodiments, or is configured to perform a sending/receiving operation performed by the device 101 in the foregoing embodiments.

In the specification, claims, and accompanying drawings of this application, the terms "first", "second", "third", "fourth", and so on (if existent) are intended to distinguish between similar objects but do not necessarily indicate a specific order or sequence. It should be understood that the data used in such a way are interchangeable in appropriate circumstances, so that the embodiments described herein can be implemented in another order other than the order illustrated or described herein. In addition, terms such as "include", "have", and any other variants are intended to cover non-exclusive inclusions, for example, a process, method, system, product, or device that includes a series of steps or units is not necessarily limited to those clearly listed steps or units, but may include other steps or units that are not clearly listed or inherent to such a process, method, product, or device.

It may be clearly understood by persons skilled in the art that, for convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical service division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate parts may or may not be physically separate, and parts displayed as units may or may not be physical units, and may be located in one position, or may be distributed on a plurality of network units. Some or all of the units may be selected according to actual requirements to achieve the objectives of the solutions of embodiments.

In addition, service units in embodiments of this application may be integrated into one processing unit, or each of the units may exist alone physically, or two or more units may be integrated into one unit. The integrated unit may be implemented in a form of hardware, or may be implemented in a form of a software service unit.

When the integrated unit is implemented in the form of a software service unit and sold or used as an independent product, the integrated unit may be stored in a computer-readable storage medium. Based on such an understanding, the technical solutions of this application essentially, or the part contributing to the conventional technology, or all or a part of the technical solutions may be implemented in a form of a software product. The computer software product is stored in a storage medium and includes several instructions for instructing a computer device (which may be a personal computer, a server, a network device, or the like) to perform all or a part of the steps of the methods in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

Persons skilled in the art should be aware that in the foregoing one or more examples, the services described in the present invention may be implemented by using hardware, software, firmware, or any combination thereof. When the present invention is implemented by using the software, the services may be stored in a computer-readable medium or transmitted as one or more instructions or code in the computer-readable medium. The computer-readable medium includes a computer storage medium and a communication medium, where the communication medium includes any medium that enables a computer program to be transmitted from one place to another. The storage medium may be any available medium accessible to a general-purpose or dedicated computer.

The objectives, technical solutions, and beneficial effects of the present invention have been further described in detail in the foregoing specific implementations. It should be understood that the foregoing descriptions are merely specific implementations of the present invention.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A data reporting method, wherein the method comprises:
sending, by a first device, first in-situ flow information telemetry iFIT measurement information to a control and management device at a first moment in a first reporting cycle; and
sending, by a second device, second iFIT measurement information to the control and management device at a second moment in the first reporting cycle, wherein
the first reporting cycle is a cycle for the first device and the second device to report iFIT measurement information to the control and management device, and the first moment is different from the second moment.

2. The method according to claim 1, wherein
a remainder obtained by dividing a value corresponding to a first time unit at the first moment by a first value is equal to a remainder obtained by dividing a unique identifier of the first device by the first value, the first value is an integer less than or equal to a cycle for the first device to report iFIT measurement information to the control and management device, and a unit of the cycle is the first time unit.

3. The method according to claim 1, wherein the first moment is a moment randomly selected by the first device.

4. The method according to any one of claims 1 to 3, wherein
a remainder obtained by dividing a value corresponding to the first time unit at the second moment by the first value is equal to a remainder obtained by dividing a unique identifier of the second device by the first value, the first value is an integer less than or equal to a cycle for the second device to report iFIT measurement information to the control and management device, and a unit of the cycle is the first time unit.

5. The method according to any one of claims 1 to 3, wherein the second moment is a moment randomly selected by the second device.

6. The method according to claim 2 or 4, wherein the unique identifier comprises any one of the following:
a loopback address of a device, a media access control MAC address of the device, a router identifier of the device, and last N digits of a local nanosecond moment of the device, wherein N is greater than or equal to 1.

7. A data reporting method, wherein the method comprises:
obtaining, by a first device, complete in-situ flow information telemetry iFIT measurement information that needs to be reported to a control and management device in a first reporting cycle, wherein the complete iFIT measurement information comprises a plurality of pieces of sub-iFIT measurement information; and
separately reporting, by the first device, the plurality of pieces of sub-iFTT measurement information to the control and management device at a plurality of different moments in the first reporting cycle, wherein the first reporting cycle is a cycle for the first device to report iFIT measurement information to the control and management device.

8. The method according to claim 7, wherein the plurality of pieces of sub-iFIT measurement information comprise first iFIT measurement information and second iFIT measurement information, and the separately reporting, by the first device, the plurality of pieces of sub-iFTT measurement information to the control and management device at a plurality of different moments in the first reporting cycle comprises:
reporting, by the first device, the first iFIT measurement information to the control and management device at a first moment in the first reporting cycle, and reporting the second iFIT measurement information to the control and management device at a second moment in the first reporting cycle, wherein the first moment is different from the second moment.

9. The method according to claim 8, wherein the first moment is a moment randomly selected by the first device in the first reporting cycle.

10. The method according to any one of claims 7 to 9, wherein the second moment is a moment randomly selected by the first device in the first reporting cycle.

11. A data reporting method, wherein the method comprises:
obtaining, by a first device, first in-situ flow information telemetry iFIT measurement information; and
reporting, by the first device, the first iFIT measurement information to a control and management device at a first moment randomly selected in a first reporting cycle, wherein the first reporting cycle is a cycle for the first device to report iFIT measurement information to the control and management device.

12. The method according to claim 11, wherein the method further comprises:
obtaining, by the first device, second iFIT measurement information; and
reporting, by the first device, the second iFIT measurement information to the control and management device at a second moment randomly selected in a second reporting cycle, wherein the first reporting cycle and the second reporting cycle are different reporting cycles.

13. The method according to claim 11 or 12, wherein the obtaining, by a first device, first in-situ flow information telemetry iFIT measurement information comprises:
obtaining, by the first device, complete in-situ flow information telemetry iFIT measurement information that needs to be reported to the control and management device in the first reporting cycle, wherein the complete iFIT measurement information comprises a plurality of pieces of sub-iFTT measurement information, and the plurality of pieces of sub-iFTT measurement information comprise the first in-situ flow information telemetry iFIT measurement information; and obtaining, by the first device, the first iFIT measurement information according to the iFIT measurement information.

14. The method according to claim 13, wherein the plurality of pieces of sub-iFIT measurement information further comprises third iFIT measurement information, and the method further comprises:
obtaining, by the first device, the third iFIT measurement information according to the complete iFIT measurement information; and
reporting, by the first device, the third iFIT measurement information to the control and management device at a third moment in the first reporting cycle.

15. The method according to claim 14, wherein the third moment is a moment randomly selected by the first device in the first reporting cycle.

16. A data obtaining method, wherein the method comprises:
receiving, by a control and management device, first in-situ flow information telemetry iFITmeasurement information sent by a first device at a first moment in a first reporting cycle; and
receiving, by the control and management device, second iFIT measurement information sent by a second device at a second moment in the first reporting cycle, wherein the first moment is different from the second moment, and the first reporting cycle is a cycle for the first device and the second device to report iFIT measurement information to the control and management device.

17. The method according to claim 16, wherein the first moment is a moment randomly selected by the first device in the first reporting cycle.

18. The method according to claim 17, wherein
a remainder obtained by dividing a value corresponding to a first time unit at the first moment by a first value is equal to a remainder obtained by dividing a unique identifier of the first device by the first value, the first value is an integer less than or equal to a cycle for the first device to report iFIT measurement information to the control and management device, and a unit of the cycle is the first time unit.

19. The method according to any one of claims 16 to 18, wherein the second moment is a moment randomly selected by the second device in the first reporting cycle.

20. The method according to any one of claims 16 to 18, wherein
a remainder obtained by dividing a value corresponding to the first time unit at the second moment by the first value is equal to a remainder obtained by dividing a unique identifier of the second device by the first value, the first value is an integer less than or equal to a cycle for the second device to report iFIT measurement information to the control and management device, and a unit of the cycle is the first time unit.

21. The method according to any one of claims 16 to 20, wherein the method further comprises:
receiving, by the control and management device at a third moment in the first reporting cycle, third iFIT measurement information sent by the first device, wherein both the first iFIT measurement information and the third iFIT measurement information are sub-iFIT measurement information comprised in complete iFIT measurement information that the first device needs to report to the control and management device in the first reporting cycle.

22. The method according to claim 21, wherein the third moment is a moment randomly selected by the second device in the first reporting cycle.

23. The method according to claim 21, wherein
a remainder obtained by dividing a value corresponding to the first time unit at the third moment by a second value is equal to a remainder obtained by dividing the unique identifier of the first device by the second value, the second value is an integer less than or equal to the cycle for the first device to report iFIT measurement information to the control and management device, and the unit of the cycle is the first time unit.

24. The method according to any one of claims 16 to 23, wherein the method further comprises:
receiving, by the control and management device at a fourth moment in the first reporting cycle, fourth iFIT measurement information sent by the second device, wherein both the second iFIT measurement information and the fourth iFIT measurement information are sub-iFIT measurement information comprised in complete iFIT measurement information that the second device needs to report to the control and management device in the first reporting cycle.

25. The method according to claim 24, wherein the fourth moment is a moment randomly selected by the second device in the first reporting cycle.

26. The method according to claim 24, wherein
a remainder obtained by dividing a value corresponding to the first time unit at the fourth moment by the second value is equal to a remainder obtained by dividing the unique identifier of the second device by the second value, the second value is an integer less than or equal to the cycle for the second device to report iFIT measurement information to the control and management device, and the unit of the cycle is the first time unit.

27. A data reporting system, wherein the system comprises a first device, a second device, and a control and management device, wherein
the first device is configured to send first in-situ flow information telemetry iFIT measurement information to the control and management device at a first moment in a first reporting cycle; and
the second device is configured to send second iFIT measurement information to the control and management device at a second moment in the first reporting cycle, wherein the first moment is different from the second moment, and the first reporting cycle is a cycle for the first device and the second device to report iFIT measurement information to the control and management device.

28. A first device, comprising:
a communications interface; and
a processor connected to the communications interface, wherein
the first device is configured to perform the method according to any one of claims 7 to 15 by using the communications interface and the processor.

29. A control and management device, comprising:
a communications interface; and
a processor connected to the communications interface, wherein
the control and management device is configured to perform the method according to any one of claims 16 to 26 by using the communications interface and the processor.

30. A first device, wherein the first device comprises a memory and a processor, wherein
the memory is configured to store program code; and
the processor is configured to run instructions in the program code, to enable the first device to perform the method according to any one of claims 7 to 15.

31. A control and management device, wherein the control and management device comprises a memory and a processor, wherein
the memory is configured to store program code; and
the processor is configured to run instructions in the program code, to enable the control and management device to perform the method according to any one of claims 16 to 26.

32. A computer-readable storage medium, wherein the computer-readable storage medium stores instructions, and when the instructions are run on a computer, the computer is enabled to perform the method according to any one of claims 7 to 15 or claims 16 to 26.

33. A communications system, comprising a first device, a second device, and a control and management device, wherein the control and management device is configured to perform the method according to any one of claims 16 to 26.

34. A communications system, comprising a first device, a second device, and a control and management device, wherein the first device is configured to perform the method according to any one of claims 7 to 15.
